# EUROPÄISCHE PATENTANMELDUNG

(11) **EP 1 022 118 A2**
(43) Veröffentlichungstag der Anmeldung: **26.07.2000**
(21) Anmeldenummer: 00100706.1
(22) Anmeldetag: 14.01.2000
(51) Int. Cl.: B29D 30/70

(54) **Vorrichtung und Verfahren zur Herstellung einer Gurtelbandage eines Fahrzeugluftreifens**

(30) Priorität: 20.01.1999 DE 19901958
(71) Anmelder: Continental Aktiengesellschaft, 30165 Hannover (DE)
(72) Erfinder: Glinz, Michael, 31535 Neustadt (DE)

(57) **Zusammenfassung**

Vorrichtung zur Herstellung einer Gürtelbandage (14) eines Fahrzeugluftreifens durch schraubenförmiges Aufwickeln eines kontinuierlichen geförderten Bandagenstreifens (16) eines Bandagematerials mit einem oder mehreren parallelen Festigkeitsträgern mit einem E-Modul von > 300mN/ₜₑₓ insbesondere aus aromatischem Polyamid, auf eine mit Gürtellagen bewegte Gürtelaufbautrommel (15),
- wobei die Gürtelauftrommel zunächst während des Wickelns in Wirkverbindung zu gesteuerten Antriebsmittel steht,
- mit Mitteln zur Zufuhr des Bandagematerial zur Gürtelaufbautrommel,
- mit Mitteln zur axialen Führung und zur gesteuerten Veränderung der axialen Position des Bandagematerials beim Aufwickeln auf die Gürtelaufbautrommel,
- mit Mitteln zum Stauchen des Bandagematerials in dessen Längsrichtung in Abhängigkeit von der axialen Position des zugeführten Bandagematerials.

## Beschreibung

Die Erfindung betrifft eine Vorrichtung und ein Verfahren zur Herstellung einer Gürtelbandage eines Fahrzeugluftreifens durch schraubenförmiges Aufwickeln eines kontinuierlich geförderten Bandagestreifens auf eine mit Gürtellagen belegte Aufbautrommel. Es ist bekannt, Fahrzeugluftreifen mit einer radialen Karkasse, einem Gürtel und oberhalb des Gürtels mit einer schraubenförmig aufgewickelten Gürtelbandage auszubilden. Zur Fertigstellung des Reifens wird der so vorgefertigte Reifenrohling bombiert und vulkanisiert. Während der Bombage und der Resterhebung in der Vulkanisationsmulde wird der Gürtelmittenbereich stärker expandiert als die Gürtelschulterbereiche. Hierdurch wird die auf den Gürtel aufgebaute den Gürtel gegen weitere Erhebungen sichernde Bandage im Äquatorialbereich des Gürtels stärker gedehnt als im Schulterbereich. Diese Dehnungsunterschiede bewirken eine geringere Vorspannung des Gürtelschulterbereichs gegenüber dem Kronenbereich. Bei Hochgeschwindigkeiten wirken starke Fliehkräfte auf den Gürtel. Während im Kronenbereich die zwischen Bandage und Gürtel wirkende Vorspannung eine weitere Erhebung aufgrund der Fliehkräfte weitgehend ausschließen, können im Schulterbereich weitere Erhebungen der weniger stark eingespannten Gürtelbereiche auftreten. Dies kann zur Ablösung des Gürtels führen.

Um dem entgegenzuwirken ist beispielsweise aus der EP 0 319 588 B1 bekannt, entsprechend den während der Erhebungsphase erwarteten Dehnungsunterschieden der Bandage die Bandage mit unterschiedlich starker Spannung auf der Gürtelaufbautrommel aufzulegen. So wird die Bandage auf den auf der im wesentlichen zylindrischen Gürtelaufbautrommel aufgelegten Gürtel im Schulterbereich mit höherer Zugspannung aufgelegt als im Kronenbereich. Auf diese Weise werden die im fertigen Reifen auftretenden Dehnungsunterschiede der Bandage reduziert.

Das durch die EP 0 319 588 B1 bekannte Verfahren führt zuverlässig zu einem vergleichmäßigteren Dehnungsverhalten, solange das gesamte Bandagematerial über seine Länge konstante Materialeigenschaften aufweist und beispielsweise ein Cord aus Nylonmaterial ist. Nylon hat ausreichend Dehnungs- und Spannungsreserven, um zu der ohnehin während der Bombage und der Resterhebung in der Vulkanisationseinrichtung erfolgten Dehnung noch zusätzliche Vorspannungen beim Aufbringen der Bandage auf die Gürteltrommel ohne Gefährdung der Funktionsfähigkeit der Bandage zu ermöglichen. Damit wirklich eine zuverlässige Vergleichmäßigung des Dehnungsverhaltens im Reifen gewährleistet ist, ist jedoch sicherzustellen, dass das E-Modul des Nylons über die gesamte Länge des Bandagematerials und während des gesamten Wicklungsvorgangs ohne geringste Schwankungen konstant bleibt. Bereits geringe Schwankungen des E-Moduls aufgrund von Materialschwankungen, Bearbeitungsschwankungen oder aus sonstigen Gründen führen dazu, dass zwar ein idealer Spannungsverlauf der Bandgae auf der zylindrischen Gürtelaufbautrommel eingestellt wird, dass dieser aufgrund der schwankenden E-Moduli jedoch nicht die während der Bombage und der Resterhebung erzeugten Dehnungsunterschiede gleichmäßig egalisiert.

Bei Verwendung von Bandagen mit Festigkeitsträgern mit hohem E-Modul von > 300mN/ₜₑₓ, z.B. von einem aromatischen Polyamid, wie es Aramid darstellt, kann es aufgrund der geringen Dehnbarkeit des Materials bei Aufbringung zusätzlicher Dehnungen zur während der Bombage ohnehin bereits auftretenden Dehnung des so gering dehnbaren Materials bei Anwendung der zusätzlichen Vorspannung gemäß EP 0 319 588 B1 zu Rissbildungen der Bandage und somit zu einer Zerstörung des Bandagematerials kommen.

Bei solchen Matrialien ist daher das vorgeschlagene Verfahren nicht geeignet.

Der Erfindung liegt die Aufgabe zugrunde, eine Vorrichtung und ein Verfahren zur Herstellung einer Gürtelbandage eines Fahrzeugluftreifens durch schraubenförmiges Aufwickeln eines kontinuierlichen geförderten Bandagestreifens, wobei das Bandagematrial aus Festigkeitsträger aus einem oder mehreren parallelen Festigkeitsträgern mit einem E-Modul von > 300mN/ₜₑₓ besteht, insbesondere von aromatischem Polyamid, auf eine mit Gürtellagen belegte Aufbautrommel zu schaffen, bei dem die Zuverlässigkeit der Bandage auch bei diesen Materialien den Anforderungen eines modernen Reifens entspricht.

Die Aufgabe wird erfindungsgemäß durch die Vorrichtung gemäß den Merkmalen von Anspruch 1 sowie durch das Verfahren gemäß dem Merkmal zum Anspruch 7 gelöst. Das mit den Mitteln zur Zufuhr des Bandagematerials der Gürtelaufbautrommel zugeführte und von den Mitteln zur axialen Führung des Bandagematerials jeweils in ihrer axialeren Position entsprechend der axialen Soll-Position des aufzulegenden Bandagematerials ausgerichtete Bandagematrial wird mit den Mitteln zur Stauchung des Bandagematrials in Abhängigkeit von der axialen Position des Bandagematerials auf der Gürtelaufbautrommel gestaucht, so dass auch die Gürteltrommel beim Drehen der Gürteltrommel mit Hilfe des Antriebs auf der Gürteltrommel schraubenförmig mit geradlinigen Festigkeitsträgern, die in ihrer Längsrichtung gestaucht sind, aufgewickelt wird. Die üblicherweise im ungestauchten Zustand während der Bombage und der Resterhebung in der Vulkanisationsmulde leicht überbeanspruchten und zur Rissbildung neigende Festigkeitsträger, insbesondere aus Aramid, werden nun bei der Bombage und Resterhebung aus dem gestauchten zunächst wieder in den Normalzustand gedehnt und erfahren darüber hinaus nur noch einen geringen Anteil an Restdehnung, so dass die Gefahr der Rissbildung, in dem auf diese Weise deutlich geringer belasteten Bandagematerial reduziert wird. Dabei ist es möglich, die Bandage entsprechend den individuellen Erfordernissen an unterschiedlichen axialen Positionen unterschiedlich stark zu stauchen. Beispielsweise ist es möglich, dem in axialer Richtung der Bandage im Reifen unterschiedlichen Dehnungsverlauf, den die Bandage während der Bombage und der Resterhebung erfährt, durch einen egalisierenden Stauchungsverlauf der Bandage auf der Gürtelaufbautrommel vorbeugend entgegenzuwirken. Hierdurch weist der fertig ausvulkanisierte Reifen einen vergleichmäßigten Dehnungsverlauf der Bandage auch bei Aramid auf. Da bei der Einstellung des Stauchungsverlaufs auch unmittelbar der Dehnung entgegengewirkt wird, sind auch realistischerweise auftretende Materialschwankungen und somit Schwankungen im E-Modul des Bandagematerials für die Qualität des Grades der Vergleichmäßigung des Dehnungsverlaufs im fertigen Reifen unerheblich. Im Gegensatz zur Einstellung der Zugspannungen entsprechend der Lehre der EP 0319 588 B1 wird auch bei den realistischerweise auftretenden Materialschwankungen durch die Einstellung des Stauchungsverlaufs auf der Trommel unmittelbar und zuverlässig die Gleichmäßigkeit des Dehnungsverlaufs der Bandage im fertigen Reifen eingestellt.

Bevorzugt ist die Ausbildung gemäß den Merkmalen von Anspruch 2 sowie das Verfahren gemäß den Merkmalen von Anspruch 8. Durch die Ondulation des Bandagematerials mit Hilfe der Mittel zur Ondulation mit Amplituden in Abhängigkeit von der axialen Position des Bandagematerials auf der Gürtelaufbautrommel wird das Bandagematerial in onduliertem Zustand der Gürtelaufbautrommel zugeführt und dort nach Auflegen mit Hilfe der Mittel zum Glätten und Stauchen wieder begradigt und dabei gestaucht. Hierdurch wird einfach das schraubenförmige Aufwickeln eines gestauchten Bandagestreifens auf der angetriebenen Gürtelaufbautrommel ermöglicht. Durch Einstellung der Ondulationsamplituden in Abhängigkeit von der jeweiligen axialen Position des Bandagematerials auf der Gürtelaufbautrommel ist in einfacher Weise das Maß der Stauchung entsprechend den individuellen Erfordernissen in der jeweiligen axialen Position auf der Gürtelaufbautrommel einstellbar. Durch Erhöhung der Amplitude wird beim Glätten eine höhere Stauchung und durch Reduzierung der Amplitude ein geringere Stauchung erzielt.

Bevorzugt wird die Ausbildung der Vorrichtung gemäß den Merkmalen vom Anspruch 3. Zwischen den kämmenden Zahnrädern wird entsprechend der Kontur der Zähne das durch den kämmenden Bereich geführte Bandagematerial onduliert. Durch gesteuerte Veränderung des Abstandes der Zahnräder wird das Maß des Eingriffs der kämmenden Zahnräder und somit die Amplitude der Ondulation eingestellt.

Durch Ausbildung der Vorrichtung gemäß den Merkmalen von Anspruch 4 wird gewährleistet, dass die zwischen den Zahnrädern ondulierten Amplituden im Anschluß weitgehend unverändert bleiben und das Bandagematerial auf kurzem Wege in geführtem Zustand zur Gürtelaufbautrommel gefördert wird und dort in der ondulierten Form direkt vom Ondulierungsmittel aufgedrückt wird. Besonders vorteilhaft ist es, unmittelbar nach Auflegen des Bandagematerials das aufgedrückte Bandagematerial mit Hilfe der Mittel zum Glätten wieder zu begradigen und dabei zu stauchen. Besonders einfach und zuverlässig erfolgt dies durch die Ausbildung einer Bügelrolle unmittelbar im Anschluss an das Zahnrad.

Die Vorrichtung gemäß den Merkmalen von Anspruch 6 sowie das Verfahren gemäß den Merkmalen vom Anspruch 9 beinhalten eine weitere Alternative zur Erzielung der Ondulation. Das Bandagematerial wird mit Hilfe eines Führungsrades mit erhöhter Geschwindigkeit der angetriebenen Gürteltrommel zugeführt und auf dieser angedrückt. Die Geschwindigkeitsdifferenz der Bandagegeschwindigkeit und der Umfangsgeschwindigkeit der Gürteltrommel bewirken ein Stauchen des Bandagematerials während des Andrückens.

Die Erfindung wird im Folgenden anhand der in den Figuren 1 bis 9 dargestellten Ausführungsbeispielen näher erläutert.

Hierin zeigen
- Figur 1: schematische Darstellung der Bandagenzuführung und -regelung.
- Figur 2: Darstellung gemäß Figur 1 in Draufsicht mit 2 Spulköpfen
- Figur 3: Darstellung gemäß Figur 1 in Draufsicht mit 1 Spulkopf
- Figur 4: weiteres Ausführungsbeispiel mit 2 Spulköpfen
- Figur 5: Fahrzeugluftreifen mit radialer Karkasse, Gürtel und Bandage in Querschnittsdarstellung mit Schnittebene durch Reifenachse
- Figur 6 a-i: Ausführungsbeispiele zur Ausführung der Wickelbandage
- Figur 7: weiteres Ausführungsbeispiel gemäß Figur 1 für Materialien mit hohem E-Modul
- Figur 8: weitere Ausgestaltung der Ausführung von Figur 7
- Figur 9: weitere Ausgestaltung der Ausführung von Figur 7

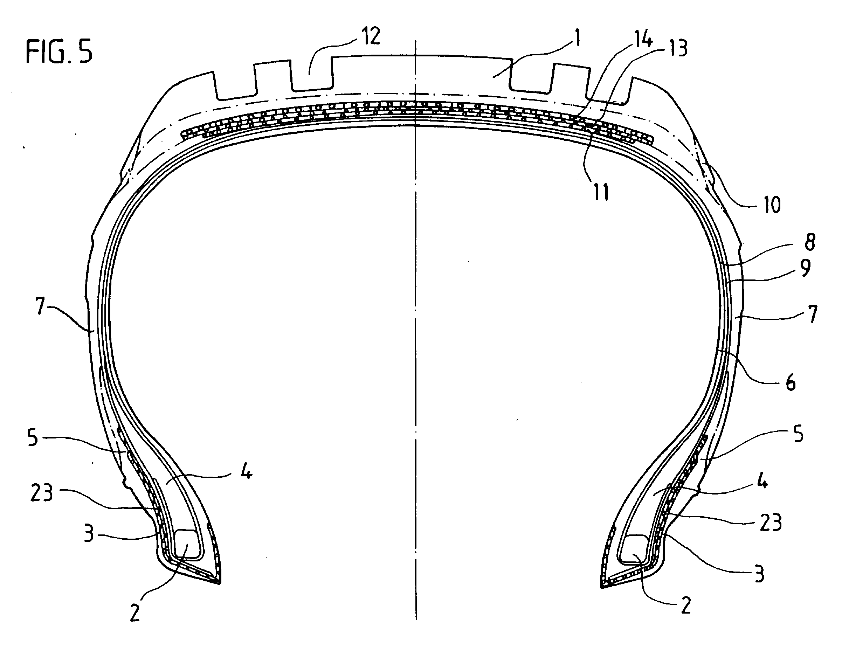

In Figur 5 ist der Aufbau eines Fahrzeugluftreifens beispielhaft dargestellt, bei dem um einen Kern 2 mit Kernprofil 4 eine erste Karkassenlage 8 außerhalb einer dichten Innenschicht 6 über den rechten Schulterbereich und die Zenitebene zu dem linken Schulterbereich und dem linken Kern 2 mit Kernprofil 4 reicht, um den sie in herkömmlicher Weise gelegt ist. Über die erste Karkassenlage 8 ist in herkömmlicher Weise eine zweite Karkassenlage 9 gelegt, die sich ebenfalls von der in Figur 5 rechts dargestellten Seite des Reifens bis zur links dargestellten Seite erstreckt. In herkömmlicher Weise ist im Kernbereich über einen Wulststreifen 23 und den Wulstverstärker 3 ein Hornprofil 5 und von diesem ausgehend bis in den Schulterbereich reichend ein Seitenstreifen 7 aufgelegt. Über den Umfang des Reifens reichen außerhalb der Karkassenlagen radialer Bauart angeordnet mehrere Stahlgürtellagen 11, 13 mit in Kautschuk eingebetteten Stahlcorden und eine Gürtelbandage 14 mit in Umfangsrichtung verlaufenden Corden. Im Schulterbereich sind zusätzlich Schulterstreifen 10 aufgelegt. Den Abschluß des Reifenaufbaus bildet in bekannter Weise ein Laufstreifen 1, der beispielsweise mit Umfangsrillen 12 profiliert ist.

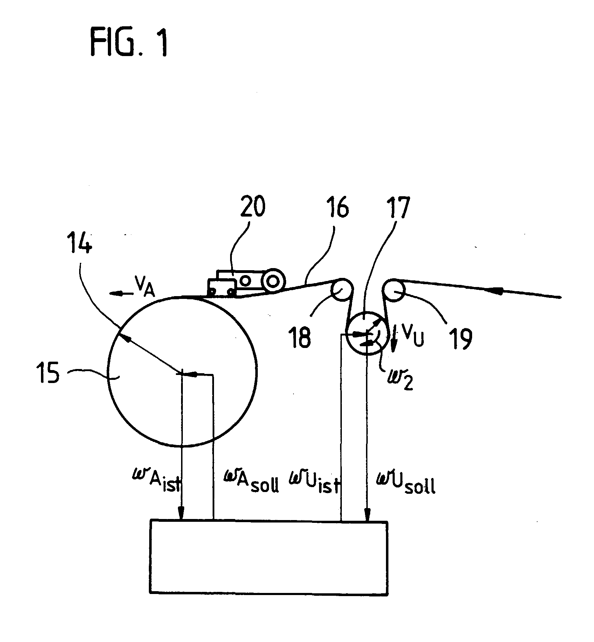

Der Reifen wird beispielsweise in einem zweistufigen Verfahren hergestellt, bei dem zunächst das Karkassenpaket aus Innenschicht 6, Karkassenlagen 8, 9 und den Kernen 2 mit Wulstverstärker 3 in bekannter, nicht dargestellter Weise aufgebaut wird. Das Gürtelpaket mit den Gürtellagen 11, 13, der Gürtelbandage 14 und dem Lauf streifen 1 wird unabhängig davon auf einer in Figur 1 dargestellten Gürteltrommel 15 in bekannter Weise aufgebaut und nach Entfernen von der Gürteltrommel in bekannter, nicht dargestellter Weise axial über das Karkassenpaket radial außerhalb konzentrisch zur Karkasse angeordnet. Durch radiale Expansion der Karkasse werden Karkassenpaket und Gürtelpaket miteinander verbunden. Dabei wird die Reifentorusform erzeugt. Der fertiggestellte Reifenrohling wird in der Vulkanisationsmulde in bekannter Weise durch radiale Erhebung in die Form gepreßt und vulkanisiert. Durch den Preßvorgang erhält die Lauffläche ihre Profilierung.

Wie in den Figuren 1 bis 4 dargestellt ist, wird die Bandage auf die auf der Gürteltrommel 15 bereits aufgebauten, nicht dargestellten Gürtellagen dadurch aufgebaut, daß das bandförmige kontinuierliche Bandagenmaterial, bestehend aus einem kontinuierlichem Band 16 mit einem oder mehreren parallelen in Kautschuk eingebetteten und in Längsrichtung des Bandes orientierten Corden durch Antreiben der Gürteltrommel 15 mit Hilfe eines nicht dargestellten Antriebsmotors mit einer Drehgeschwindigkeit ω 1 auf die Gürteltrommel aufgewickelt wird. Der Gürtelaufbautrommel in Förderrichtung des Bandes 16 vorgeordnet ist ein Spulkopf 20 bekannter Art mit nicht dargestellten axialen Führungsmitteln zur Führung des Bandes 16.

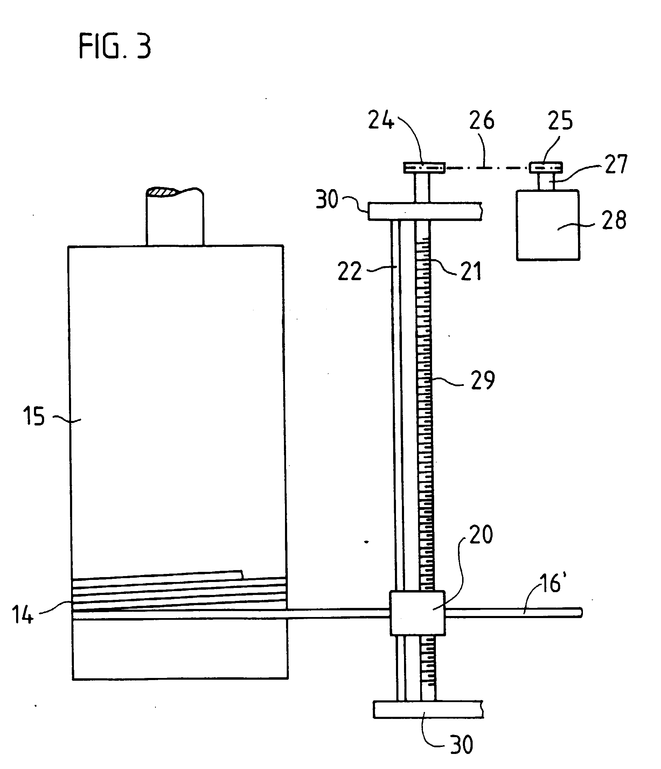

Wie in Figur 3 dargestellt ist, ist der Spulkopf 20 verschiebbar auf einer Quertraverse 22 parallel zur Achse der Gürteltrommel 15 gelagert. Mit Hilfe einer Gewindespindel 21 bekannter Art mit einem Gewinde 29, die über Zahnräder 24 und 25 und einen Zahnriemen 26 über eine Antriebswelle 27 mit einem Motor 28 gekoppelt ist, wird durch Antreiben des Motors 28 der Spulkopf 20 auf der Quertraverse 22, die in Lageböcken 30 befestigt ist, parallel zur Achse der Gürteltrommel 15 verschoben. Mit Hilfe der axialen Führungsmittel des Spulkopfes wird dabei auch das durch den Spulkopf 20 gezogene Band 16 axial mitverschoben. Auf diese Weise wird das Band 16 während des Aufwickelns auf die Gürtelaufbautrommel 15 mit einer Querkomponente in axialer Richtung beaufschlagt, wodurch das Band 16 schraubenförmig um die Gürtelaufbautrommel gewunden wird, so daß auf dem Gürtel die Bandage 14 erzeugt wird.

Dem Spulkopf 20 in Förderrichtung des Bandes vorgeordnet ist eine parallel zur Achse der Aufbautrommel drehbar gelagerte Umlenkrolle 17 ausgebildet. Durch jeweils eine dieser Umlenkrolle 17 vor- und nachgeordnete Umlenkrolle 18 bzw. 19, die parallel zur Achse der Gürteltrommel 15 frei drehbar gelagert sind, wird das Band 16, das zwischen der Umlenkrolle 17 einerseits und den Umlenkrollen 18 und 19 andererseits hindurchgeführt wird, in Kontakt zur frei drehbar gelagerten Umlenkrolle 17 gehalten.

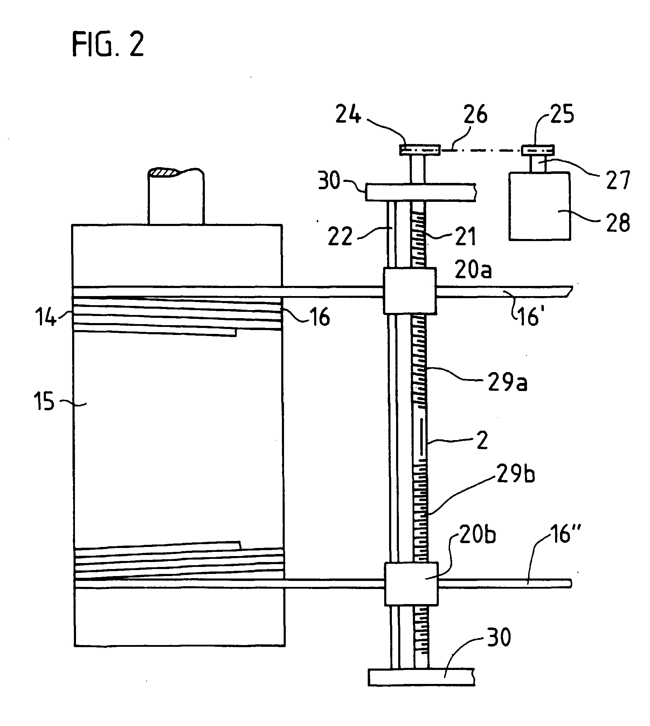

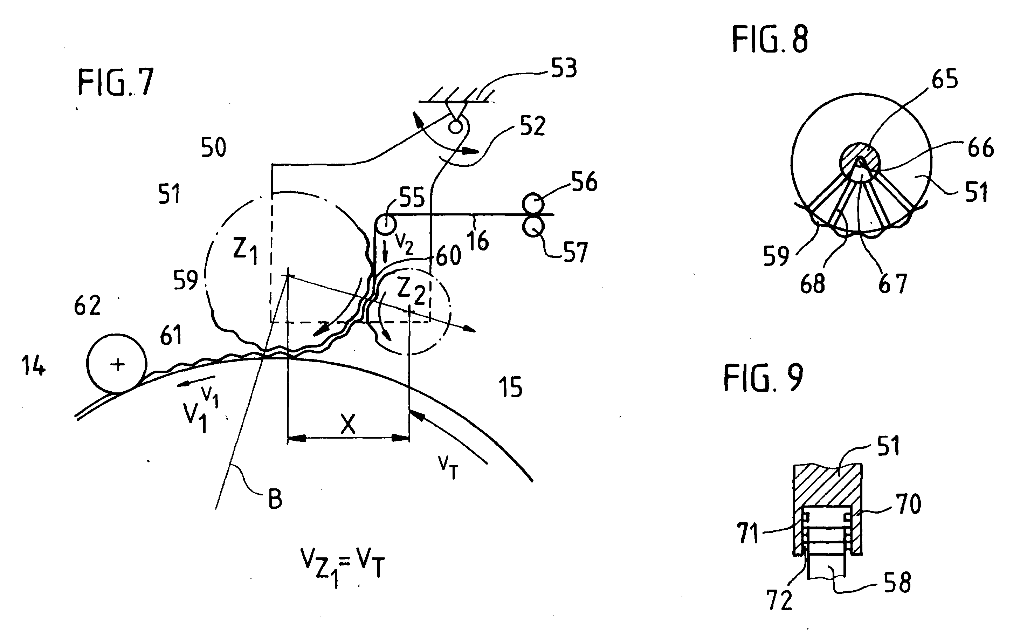

In Figur 7 ist die Herstellung einer Bandage mit Bandagestreifenmaterial dargestellt, dessen Festigkeitsträger aus textilem Monofilament oder Cordmaterial hergestellt sind, das einen hohen Elastizitätsmodul von E größer 300mN/ₜₑₓ besitzt, so daß es nur gering dehnbar ist. Solche Materialien sind beispielsweise aromatische Polyamide, wie z.B. Kevlar. Kevlar hat einen Elastizitätsmodul von ca. 500mN/ₜₑₓ. Im Spulkopf 20 mit dem Gehäuse 53, der, wie in den Ausführungsbeispielen von Figur 2 bis Figur 4 axial verschiebbar ausgebildet ist, ist im Gehäuse 53 schwenkbar gelagert ein Schwenkhebel 52 ausgebildet. Im Schwenkhebel 52 ist drehbar gelagert ein Zahnrad 51 mit abgerundeten Zähnen 59. In kämmendem Kontakt zu dem Zahnrad 51 ist im Schwenkhebel 52 ein Zahnrad 54 mit kleinerem Zahnkranzdurchmesser und korrespondierend ausgebildeten abgerundeten Zähnen 58. Die Zahl der Zähne 58 ist geringer als die Zahl der Zähne 59. Das Zahnrad 51 ist über seine Achse mit einem nicht dargestellten gesteuerten Antrieb verbunden. Das Bandagematerial 16, das beispielsweise zwischen zwei Führungsrollen 56 und 57 bekannter Art um eine im Schwenkhebel 52 drehbar gelagerte Umlenkrolle 55 geführt wird, wird durch den kämmenden Bereich zwischen den Zahnrädern 51 und 54 geführt, wobei es durch das angetriebene Zahnrad 51 mit einer Bahngeschwindigkeit V 2 in den kämmenden Bereich eingezogen wird. Zwischen den Zahnrädern 51 und 54 wird das Bandagematerial 16 durch die miteinander kämmenden Zähne 58 und 59 der beiden Zahnräder 51 und 54 onduliert. Es wird vom Zahnrad 51 in Drehrichtung mitgenommen, so daß es auf die bereits auf die Gürteltrommel 15 aufgelegte Gürtellage von der angetriebenen Gürtelaufbautrommel 15 aufgewickelt wird. Das Bandagematerial 16 behält dabei seinen ondulierten Zustand im Bereich 61 im Anschluß an das Zahnrad 51 bei. Mit Hilfe einer Bügelrolle 62, die parallel zur Gürtelaufbautrommel gelagert ist und die das ondulierte Bandagematerial während des Drehens der Gürtelaufbautrommel 15 von radial außen auf die Gürteloberfläche drückt, wird das Bandagematerial unter Stauchung geglättet. Im Anschluß an die Bügelrolle 62 bildet das gestauchte Bandagematerial die Bandage 14 des Gürtels.

Das Zahnrad 51 wird so angetrieben, daß sein Zahnspitzenumfang die gleiche Umfangsgeschwindigkeit V 1 wie der Wickelumfang der Gürtelaufbautrommel 15 aufweist. Die Geschwindigkeit V 1 ist kleiner als die Einzugsgeschwindigkeit V 2 des Bandagematerials in den Umfangsbereich des Zahnrades 51.

Das Zahnrad 54 ist mit seiner Drehachse radial in Richtung der Drehachse des Zahnrades 51 gesteuert verschiebbar mit einem Verstellmotor ausgebildet. Mit Hilfe dieses Stellmotors ist der Abstand X zwischen den beiden Drehachsen der beiden Zahnräder 51 und 54 einstellbar. Hierdurch ist das Maß des Ineinandergreifens der Zähne 58 und 59 im Kämmbereich der beiden Zahnräder und somit die Amplitude der Ondulation und somit das Maß der Stauchung, die durch die Bügelrolle 62 erzeugt wird, einstellbar.

Entsprechend den zu erwartenden Dehnungen des Bandagematerials während der Ausformung in der Vulkanisationsmulde wird diesen Dehnungen entgegenwirkend mit Hilfe der Vorrichtung von Figur 9 das Bandagematerial 16 vorgestaucht. So wird beispielsweise bei Reifen, bei denen durch Ausformung und Vulkanisation im Kronenbereich eine um 2 % höhere Dehnung als im Schulterbereich erwartet wird, beim Aufspulen entsprechend der Vorrichtung von Figur 9 im Kronenbereich eine um 2 % höhere Stauchung vorgenommen als im Schulterbereich. Diese höhere Stauchung wird dadurch erreicht, daß während des Wickelns im Kronenbereich das Zahnrad 54 radial näher an das Zahnrad 51 herangeführt wird, so daß sich der Abstand X verkleinert und bei Wickeln im Schulterbereich das Zahnrad 54 weiter vom Zahnrad 51 entfernt wird, so daß sich der Abstand X vergrößert und die Ondulationsamplitude verkleinert. Hierdurch verändert sich die Einzugsgeschwindigkeit V 2. Beim Vergrößern der Ondulationsamplitude wird V 2 größer, beim Verkleinern der Ondulationsamplitude wird V 2 kleiner.

Der hierdurch beim Wickeln erzielten größeren Stauchung im Bereich der Reifenkrone gegenüber der Reifenschulter wird die während der Ausformung und Reifenvulkanisation erzeugte höhere Dehnung im Kronenbereich und die geringere Dehnung im Schulterbereich überlagert, so daß im fertigen ausvulkanisierten Reifen gemäß Figur 1 der Dehnungsverlauf der fertigen Bandage 14 über die axiale Breite des Reifens vergleichmäßigt ist.

Die Verzahnung der Zahnräder 51 und 54 ist dabei beispielsweise so gewählt, daß maximal 4 % Stauchung erreicht wird.

Der Antriebsmotor zum Antreiben der Gürtelaufbautrommel 15 und der Antriebsmotor zum Antreiben des Zahnrads 51 sowie der Motor 28 zum axialen Verschieben des Spulkopfes 20 sind mit einem Steuerrechner verbunden. Die Steuerung erfolgt so, daß das Band 16 in der jeweiligen entsprechenden axialen Position des Spulkopfes 20 eine gewünschte Stauchung beim Aufwickeln auf die Gürtelaufbautrommel 15 erhält. Die gewünschte Stauchung des Bandes für die jeweilige axialen Position des Spulkopfes 20 wird dadurch erzeugt, daß die Bahngeschwindigkeit V 1 des Bandes 16 am Wickelumfang der Gürtelaufbautrommel 15 kleiner als die zeitgleiche Bahngeschwindigkeit V 2 des Bandes 16 im Einzugsbereich der Zahnräder 51, 59 beträgt und der Abstand X zwischen den Achsen der Zahnräder als Maß für die Ondulationsamplitude eingestellt wird.

Für den Reifen von Figur 5 wird hierdurch beispielsweise dem bei der Wicklung gemäß Figur 1 und Figur 3 erzielten Stauchungsverlauf über die Achsrichtung der Gürtelaufbautrommel mit einer um 2 % höheren Stauchung im Kronenbereich als im Schulterbereich die während der Expansion in der Reifenvulkanisationsform erzeugte Dehnung mit ca. 2 % höherer Dehnung im Reifenkronenbereich als im Schulterbereich überlagert. Die Überlagerung bewirkt, daß im fertig vulkanisierten Reifen gemäß Figur 5 im Schulter- und im Kronenbereich die Bandage gleichermaßen stark, aber mit reduzierter Dehnung gedehnt ist. Die Bandage ermöglicht somit eine gleichmäßigere Haltewirkung über den gesamten axialen Bereich des Gürtels, auch bei gering dehnbaren Bandagematerialien, so daß ein Anheben z.B. der Schulterkanten des Gürtels bei Hochgeschwindigkeiten sicherer vermieden werden kann.

Der beim Wickeln des Bandes 16 gemäß Figur 1 und Figur 3 erzeugte Stauchungsverlauf wird entsprechend dem während der Expansion des Reifens in der Reifenvulkanisationsform zu erwartenden Dehnungsverlauf so durch Steuerung der Ondulationsamplituden eingestellt, daß er über die gesamte axiale Breite des Gürtels einen gleichmäßigen Dehnungsverlauf im fertigen vulkanisierten Reifen gemäß Figur 5 bewirkt.

Soweit der exakte Dehnungsverlauf über die axiale Breite des Gürtels, der während der Expansion in der Vulkanisationsform auftritt, nicht bekannt ist, wird das Band 16 in erster Näherung so auf die Gürtelaufbautrommel 15 gewickelt, daß es auf der Gürtelaufbautrommel im Schulterbereich ein Minimum an Stauchung und im Kronenmittenbereich ein Maximum an Stauchung aufweist und zwischen dem Kronenbereich und Schulter kontinuierlich abnimmt.

In Figur 1 und 3 ist die Wicklung mit lediglich einem Spulkopf 20 über die gesamte axiale Breite dargestellt, wobei lediglich ein Band 16 schraubenförmig gewunden um die Gürtelaufbautrommel gewickelt wird, so daß es eine Bandage bildet, die sich über die gesamte axiale Breite des Gürtels erstreckt.

In Figur 2 ist ein anderes Ausführungsbeispiel dargestellt, bei dem zur Erhöhung der Produktivität die Wicklung mit zwei Spulköpfen 20 a und 20 b erfolgt, wobei durch Spulkopf 20 a ein Band 16' und durch Spulkopf 20 b ein Band 16'' schraubenförmig auf den auf die Gürtelaufbautrommel aufgebauten Gürtel gewunden wird, wobei der Spulkopf 20 a das Band zwischen Mittenbereich des Gürtels und rechter Schulter und der Spulkopf 20 b das Band 16'' zwischen Mittenbereich und linker Schulter des Gürtels wickelt. Beim Verdrehen der Spindel 21 mit Hilfe des Motors 28 wird der Spulkopf 20 a über ein Rechtsgewinde und der Spulkopf 20 b über ein Linksgewinde axial auf der Traverse 8 verschoben, so daß die beiden Spulköpfe in Gegenrichtung zueinander verschoben werden und somit die Wickelrichtung der Bänder 16' und 16'' ebenfalls in axialer Richtung der Aufbautrommel aufeinander zu bzw. voneinander weg gerichtet ist. Auf diese Weise kann die Gürtelbandage 15 durch symmetrisches Wickeln zweier Bänder 16' und 16'' erzeugt werden. Der Stauchungsverlauf beim Wickeln wird wie zu Figur 1 und Figur 3 beschrieben durch Steuerung der Ondulationsamplituden in Abhängigkeit von der jeweiligen axialen Position der Spulköpfe 20 a und 20 b eingestellt. Die Spindel 21 kann auch im Ausführungsbeispiel von Figur 2 mit lediglich einem Gewinde 29 a wie in Figur 3 dargestellt ausgebildet werden. In diesem Fall werden die Spulköpfe 20 a und 20 b in die gleiche axiale Richtung verschoben bei Umdrehung der Spindel 21. Hierdurch kann eine asymmetrische Wicklung, wie im Ausführungsbeispiel von Figur 3 bereits dargestellt, mit Hilfe zweier Bänder 16' und 16'' erzielt werden.

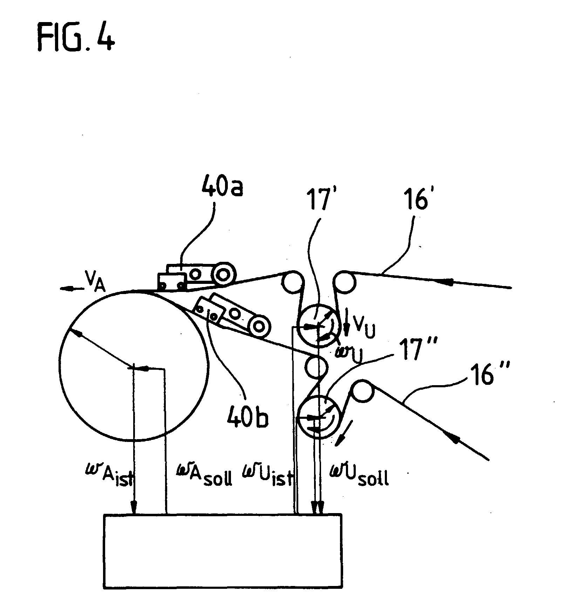

In Figur 4 ist eine weitere Ausführung der Vorrichtung zum Aufbau der Spulbandage dargestellt, wobei die Bandage ebenfalls aus zwei Bändern 16' bzw. 16'' hergestellt wird. Die beiden Spulköpfe 40 a bzw. 40 b sind jedoch jeweils auf einer eigenständigen Spindel, die nicht dargestellt ist, verschiebbar gelagert, die jeweils mit einem eigenständigen Motor zur Verschiebung angetrieben werden. Das Band 16' wird um die Umlenkrollen 17', 18', 19' und das Band 16'' um die Umlenkrollen 18'', 17'', 19'' geführt. Die Ondulationsamplitude des Spulkopfs 40a und die des Spulkopfs 40b wird jeweils von einem eigenständigen Motor, der nicht dargestellt ist, gesteuert.

In dieser Ausführungsform können die Bänder 16' und 16'' durch entsprechende Steuerung der Verschiebemotoren zum Verschieben der Spulköpfe 40 a und 40 b unabhängig voneinander in die beliebige axiale Position der Gürtelaufbautrommel verschoben werden, wobei mit Hilfe der Motoren zum Einstellen der Ondulationsamplituden die Ondulationsamplituden der beiden Spulköpfe so eingestellt werden können, daß zu jeder beliebigen Position der jeweiligen Spulköpfe 40 a und 40 b die an dieser Position des Spulkopfes für das zugehörige Band 16' bzw. 16'' gewünschte Ondulation eingestellt wird, so daß der Stauchungsverlauf der beiden Bänder 16' und 16'' auch unabhängig voneinander eingestellt werden kann.

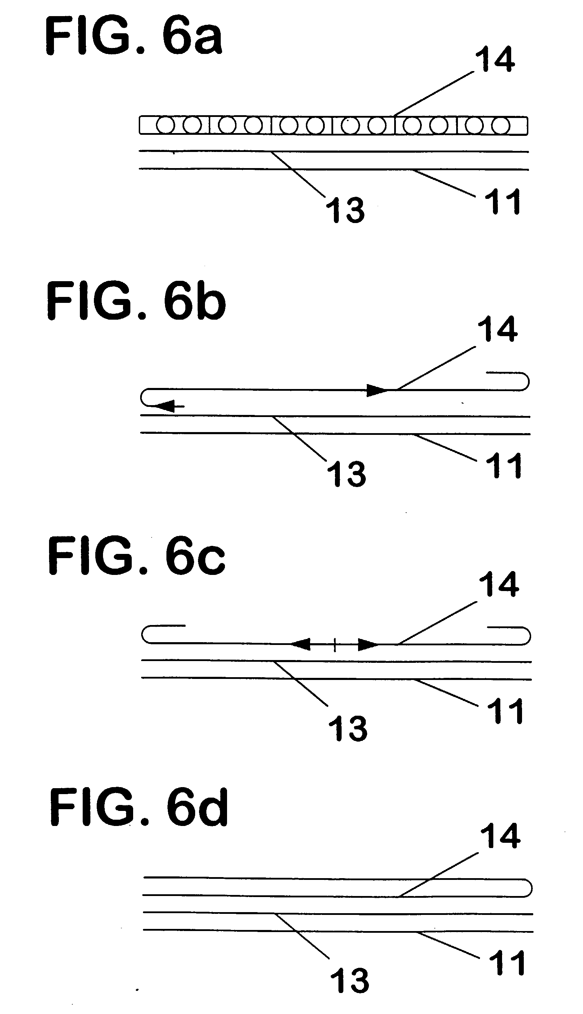

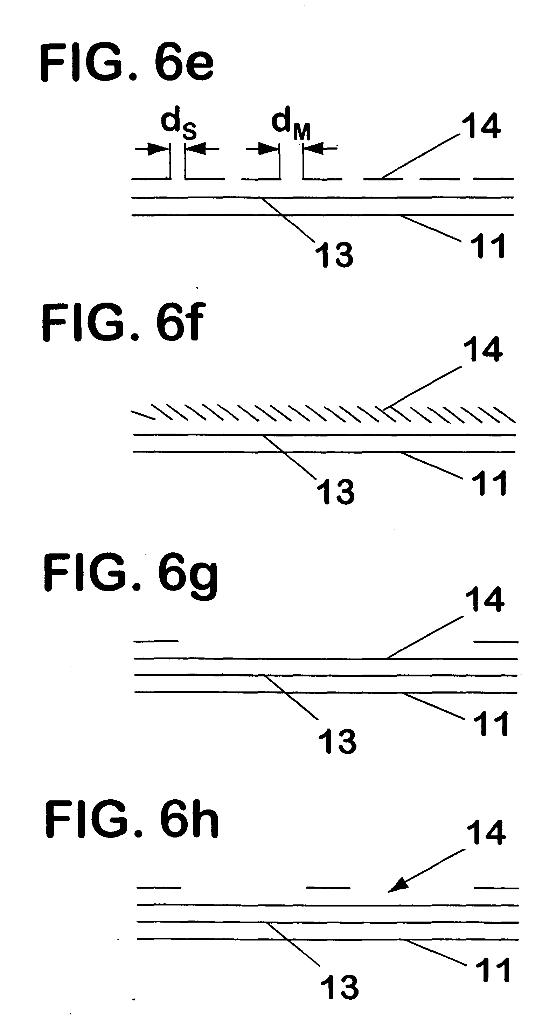

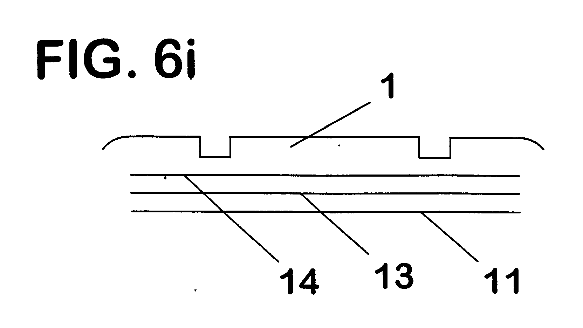

Die Bandage kann, wie in Figur 1 und Figur 6 a dargestellt, lediglich aus einer Bandagenlage bestehen, die sich über den gesamten axialen Bereich des Gürtels erstreckt. Sie kann darüber hinaus mit einem zusätzlichen Bandagenstreifen im Schulterbereich des Gürtels ausgebildet sein, wie es beispielsweise in Figur 6 e und in Figur 6 b und 6 c dargestellt ist. Dabei kann der zusätzliche Bandagenstreifen ein eigenständiger Bandagenstreifen sein, wie er in Figur 6 g dargestellt ist. Er kann aber auch durch Weiterspulen unter Richtungsumkehr des Spulkopfes erzeugt werden, wie es beispielsweise in den Figuren 6 b und 6 c dargestellt ist. Die Ausführung von Figur 6 c erfordert jedoch eine symmetrische Wicklung, wie sie beispielsweise zu Figur 2 beschrieben ist, wie sie aber auch durch eine Ausführung von Figur 1 erzielt werden kann, wobei dann mit einem Spulkopf zunächst ein erstes Band und dann mit diesem Spulkopf ein zweites Band gewickelt werden muß. Sie ist auch möglich mit Hilfe der Vorrichtung von Figur 4, mit der die Wicklung beider Bänder weitgehend unabhängig voneinander möglich ist.

Statt lediglich einen weiteren Schulterbandagestreifen aufzuwickeln, ist es auch möglich, eine zweite Bandageschicht über den gesamten Gürtelbereich zu erstrecken. Dies kann z.B. dadurch geschehen, daß über die erste Bandage eine zweite Bandage aus einem eigenständigen Bandageband gewickelt wird oder daß, wie in Figur 6 d dargestellt ist, nach Erreichen des einen Schulterbereichs durch Richtungsumkehr der Wicklungsrichtung die zweite Lage gewickelt wird.

Durch entsprechende Steuerung der Axialgeschwindigkeit der Spulköpfe ist es auch möglich, eine oder mehrere Bandagelagen so auszubilden, daß zwischen den einzelnen Wicklungen ein axialer Abstand B verbleibt, der konstant über die gesamte Gürtelbreite ist oder der, wie in Figur 6 e dargestellt ist, über die Gürtelbreite unterschiedlich ausgebildet ist. Beispielsweise ist er dann im Kronenbereich größer als im Schulterbereich oder umgekehrt im Schulterbereich größer als im Kronenbereich, je nach Anforderung an die Bandagewirkung, ausgebildet.

Die einzelnen Windungen der Bandage können nebeneinander verlaufen. Sie können auch axial schuppenförmig überlappt ausgebildet werden, wie in Figur 6 f dargestellt ist.

Figur 6 h zeigt eine Bandage, bei der zu den zusätzlichen Schulterbandagestreifen ein weiterer Mittenbandagestreifen aufgelegt ist.

Es ist auch möglich, bei breiten Umfangsrillen des Profils, wie in Figur 6 i dargestellt ist, falls festgestellt wird, daß die Breite so groß ist, daß in diesem Bereich im fertigen Reifen zu geringe Einspannung des Gürtels vorherrscht oder daß während der Formgebung in der Vulkanisationsmulde eine Verformung des Gürtels auftritt, diesen Effekten entgegenwirkend die Bandage unterhalb der Umfangsrillen mit größerer Dehnung als im umgebenden Bereich aufzuwickeln.

Soweit die Haltekraft zwischen der Formgebung der Zahnräder 59 des Zahnrades 51 und dem ondulierten Bandagematerial 16 nicht ausreicht, um das ondulierte Bandagematerial in onduliertem Zustand sicher aus dem Kämmungsbereich zwischen den Zahnrädern 51 bzw. 54 zur Gürtelaufbautrommel 15 zu führen, sind zusätzlich bekannte Führungseinrichtungen zur seitlichen Führung des ondulierten Bandagematerials in diesem Umlenkbereich sinnvoll.

Beispielsweise ist es denkbar, wie in Figur 8 dargestellt, die Achse 65 des Zahnrades 51 über ein Saugrohr 66 mit einer nicht dargestellten Vakuumquelle zu verbinden und das Zahnrad 51, das frei drehbar auf der Achse 65 in dieser Ausführungsform gelagert ist, mit Saugrohren 58, die radial von der Achse in den Zahnfuß hinein verlaufen, auszubilden. Über einen Umfangsabschnitt 66, der den Saugkanal 55 mit dem Zahnrad 51 verbindet und der im Umfangsbereich zwischen dem Kämmungsbereich zwischen den Zahnrädern 51 und 54 und der Verbindungslinie B, die den Achsen des Zahnrads 51 und der Gürtelaufbautrommel 15 angeordnet ist, ausgebildet ist, wird das Bandagematerial 16 in diesem Umlenkungsbereich zwischen Kämmungsbereich und zwischen Auflage auf die Gürtelaufbautrommel in onduliertem Zustand an das Zahnrad 51 angesaugt und festgehalten. In diesem Ausführungsbeispiel wird nicht das Zahnrad 51, sondern das Zahnrad 54 angetrieben.

In Figur 9 ist eine andere Ausgestaltung der Haltemittel des Zahnrades 51 dargestellt. Beidseitig des Zahnrades 51 ist jeweils ein Halteblech 70 bzw. 71 angeschraubt mit zwischen den Zähnen 59 des Zahnrades angeordneten nach innen gerichteten und in radialer Richtung über die Zahntiefe verteilten Haltemaßen 72, die das Bandagematerial 16 im ondulierten Zustand im Eingriff halten. Durch das Aufwickeln des ondulierten Materials auf die Gürtelaufbautrommel wird das ondulierte Bandagematerial aus dieser mechanischen Halterung gelöst.

### Bezugszeichenliste

- 1: Laufstreifen
- 2: Kern
- 3: Wulstverstärker
- 4: Kernprofil
- 5: Hornprofil
- 6: Innenschicht
- 7: Seitenstreifen
- 8: Karkassenlage
- 9: Karkassenlage
- 10: Schulterstreifen
- 11: Gürtellage
- 12: Umfangsrille
- 13: Gürtellage
- 14: Gürtelbandage
- 15: Gürteltrommel
- 16: Bandagestreifenmaterial
- 17: Umlenkrolle
- 18: Umlenkrolle
- 19: Umlenkrolle
- 20: Spulkopf
- 21: Spindel
- 22: Traverse
- 23: Wulststreifen
- 24: Zahnrad
- 25: Zahnrad
- 26: Zahnriemen
- 27: Welle
- 28: Motor
- 29: Gewinde
- 30: Lagerbock
- 40: Spulkopf
- 51: Zahnrad
- 52: Schwenkhebel
- 53: Gehäuse
- 54: Zahnrad
- 55: Umlenkrolle
- 56: Führungsrolle
- 57: Führungsrolle
- 58: Zähne
- 59: Zähne
- 60: Umlenkbereich
- 61: Trommelbereich
- 62: Bügelrolle
- 65: Achse
- 66: Saugkanal
- 67: Öffnung
- 68: Saugkanal
- 70: Blech
- 71: Blech
- 72: Haltenase

## Patentansprüche

1. Vorrichtung zur Herstellung einer Gürtelbandage eines Fahrzeugluftreifens durch schraubenförmiges Aufwickeln eines kontinuierlichen geförderten Bandagenstreifens eines Bandagematerials mit einem oder mehreren parallelen Festigkeitsträgern mit einem E-Modul von > 300mN/ₜₑₓ insbesondere aus aromatischem Polyamid, auf eine mit Gürtellagen bewegte Gürtelaufbautrommel,
- wobei die Gürtelauftrommel zunächst während des Wickelns in Wirkverbindung zu gesteuerten Antriebsmittel steht,
- mit Mitteln zur Zufuhr des Bandagematerial zur Gürtelaufbautrommel,
- mit Mitteln zur axialen Führung und zur gesteuerten Veränderung der axialen Position des Bandagematerials beim Aufwickeln auf die Gürtelaufbautrommel,
- mit Mitteln zum Stauchen des Bandagematerials in dessen Längsrichtung in Abhängigkeit von der axialen Position des zugeführten Bandagematerials.

2. Vorrichtung gemäß den Merkmalen von Anspruch 1,
- mit Mitteln zur Ondulation des Bandagematerials während der Zufuhr mit Ondulationsamplituden in Abhängigkeit von der axialen Position des zugeführten Bandagematerials auf der Gürtelaufbautrommel,
- mit Mitteln zum Glätten und Stauchen des auf die Gürtelaufbautrommel aufgelegten Bandagematerials.

3. Vorrichtung gemäß den Merkmalen von Anspruch 2,
- wobei die Mittel zur Ondulation zwei miteinander kämmende Zahnräder aufweisen, durch deren kämmenden Bereich das Bandagematerial in Längsrichtung geführt wird,
mit Mitteln zur Steuerung des Abstandes der Zahnräder zur gesteuerten Einstellung der Ondulationsamplitude.

4. Vorrichtung gemäß den Merkmalen von Anspruch 3,
- wobei das eine Zahnrad als Führungs- und als Auflegemittel zur Führung des Bandagematerials zwischen den Zahnrädern bis zur Gürtelaufbautrommel und zum Auflegen auf die Gürtelaufbautrommel ausgebildet ist.

5. Vorrichtung gemäß den Merkmalen von Anspruch 4,
- wobei in Wickelrichtung den Zahnrädern zur Führung und Auflegung nachgeordnet Mittel zum Glätten, insbesondere eine Bügelrolle zum Glätten, des ondulierten, auf die Aufbautrommel aufgelegten Bandagematerials ausgebildet sind.

6. Vorrichtung gemäß den Merkmalen von Anspruch 1,
- mit einem Führungsrad zum Führen und Aufdrücken des Bandagematerials auf die Aufbautrommel, wobei das Führungsrad gesteuert angetrieben wird,
- wobei die Bahngeschwindigkeit am Außenumfang des Führungsrades maximal gleich groß der Bahngeschwindigkeit des Außenumfangs der Trommel ist.

7. Verfahren zur Herstellung einer Gürtelbandage eines Fahrzeugluftreifens durch schraubenförmiges Aufwickeln eines kontinuierlichen geförderten Bandagestreifens mit einem oder mehreren parallelen Festigkeitsträgern mit einem E-Modul > 300mN/ₜₑₓ, insbesondere aus aromatischem Polyamid, auf eine mit Gürtellagen belegte Aufbautrommel,
- wobei das Bandagematerial zur gesteuerten Stauchung in Längsrichtung durch einen Stauchungsbereich geführt und gestaucht auf die Gürteltrommel spiralig mit geradlinigem Verlauf der Festigkeitsträger aufgewickelt wird.

8. Verfahren gemäß den Merkmalen von Anspruch 7,
- wobei das Bandagematerial zunächst onduliert, dann auf die Gürteltrommel aufgelegt, danach geglättet und dadurch gestaucht wird.

9. Verfahren gemäß den Merkmalen von Anspruch 7,
- wobei das Bandagematerial mit gegenüber der Geschwindigkeit des Gürteltrommelumfangs an der Aufwickelposition der Aufbautrommel erhöhter Geschwindigkeit der Gürteltrommel zugeführt und beim Auflegen unter Stauchung abgebremst wird.
